# EUROPEAN PATENT SPECIFICATION

(11) **EP 0 985 342 B1**
(45) Date of publication and mention of the grant of the patent: **07.04.2004**
(21) Application number: 99202697.1
(22) Date of filing: 19.08.1999
(51) Int. Cl.: A01K 5/00, B01F 7/00, B60D 1/00, B60P 5/00

(54) **Mobile device for mixing fodder**
Fahrbares Gerät zum Mischen von Futter
Appareil mobile pour mélanger du fourrage

(30) Priority: 08.09.1998 NL 1010023
(43) Date of publication of application: 15.03.2000
(73) Proprietor: Trioliet Mullos B.V., 7575 BE Oldenzaal (NL)
(72) Inventor: Van der Plas, Nicolaa, 7576 WB Oldenzaal (NL)
(74) Representative: de Vries, Johannes Hendrik Fokke

(56) References cited:
- EP-A- 0 709 022
- GB-A- 1 381 024
- US-A- 2 576 177
- US-A- 4 432 499

## Description

The invention relates to a mobile device for mixing fodder, in particular cattle fodder according to the preamble of claim 1. Such a device is known from GB-A-1381024.

A mobile device for mixing fodder may include a mixing chamber which is open on the upper side, wherein the fodder to be mixed is introduced into the mixing chamber from above by loading means, which may or may not be connected with the device. Furthermore, loading means may be present which introduce the fodder to be mixed into the mixing chamber via an opening in the side wall. Chunks of silage can be introduced into the mixing chamber thereby, which silage is loosened by the mixing elements. In addition, further components can be added to the fodder, which components are mixed with the other fodder components by means of the mixing elements, so that a homogeneous mass is formed.

A device for mixing fodder of this kind may furthermore include means for delivering the mixed fodder in a measured manner. Said delivery of mixed fodder may take place after the device has been driven to the location where the fodder is to be consumed by the cattle.

It is desirable for economic reasons to provide the device with a large mixing chamber, preferably so large that the fodder for a large group of cattle can be mixed in one cycle and subsequently be measured out at different locations. A large mixing chamber makes the mixing process more difficult, in the sense that on the one hand the mixing process takes a disproportionately long period of time while on the other hand it requires a disproportionately large amount of power.

The object of the invention is to provide a mobile device for mixing fodder, wherein the fodder is mixed into a homogeneous mass in an efficient and relatively quick manner.

According to the invention, in order to accomplish that objective, the axis of rotation of the vertical mixing element and the axes of rotation of the two horizontal mixing elements extend substantially in the same vertical plane. In practice it appeared that in this manner an efficient mixing process is obtained, wherein especially the vertical mixing element requires relatively little power, and wherein a good exchange of mixing fodder between both mixing chambers is achieved.

Prefered embodiments of the invention are disclosed in claims 2-13.

The invention furthermore relates to a method for mixing fodder in a mobile device according to claim 14.

In order to explain the invention more fully, a few embodiments thereof will now be explained in more detail with reference to the drawing. The figures are merely schematic representations, wherein corresponding parts are indicated by the same numerals.
Figure 1 is a longitudinal sectional view of one embodiment;
Figure 2 is a cross-sectional view along line II-II in Figure 1;
Figure 3 is a plan view of the mixing chamber of said embodiment;
Figure 4 is a longitudinal sectional view of another mixing chamber;
Figure 5 is a plan view of the mixing chamber of Figure 4;

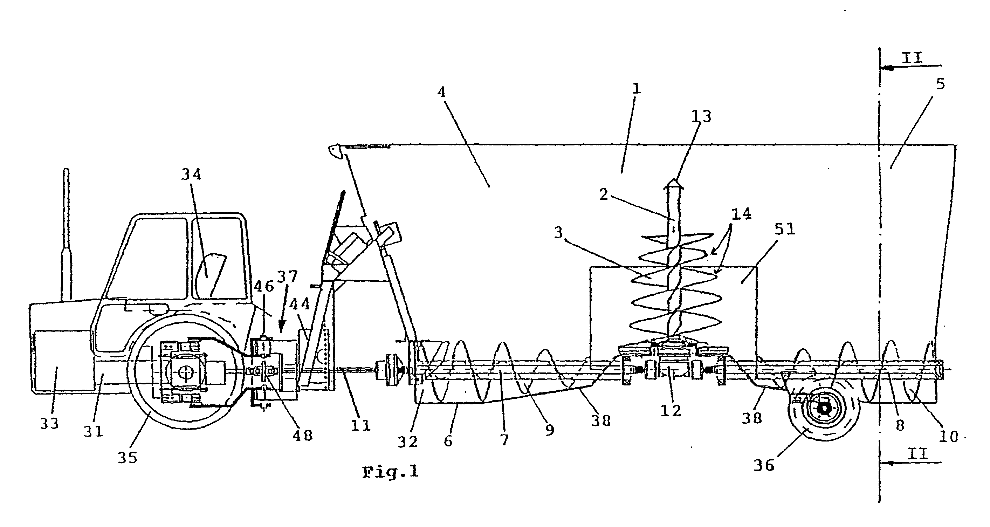

Figure 1 is a very schematic longitudinal sectional view of a device consisting of a first vehicle part 31 including a driving motor 33, a seat 34 for the driver of the device and wheels 35, and further of a second vehicle part 32 including a mixing chamber 1 and wheels 36.

The mixing chamber 1 for mixing fodder and/or other materials includes a vertical mixing element in the form of a rotor 2, which is provided with a helical blade 3. The mixing chamber includes a mixing chamber portion 4, which is disposed before rotor 2, and a mixing chamber portion 5, which is disposed behind rotor 2, assuming that the direction of movement of the device of Figure 1 is to the left. Near bottom 6 of the mixing chamber, a horizontal mixing element in the shape of a rotor 7 is mounted in mixing chamber portion 4 and a rotor 8 is mounted in mixing chamber portion 5. Both rotors 7, 8 include a helical blade 9, 10, so that the fodder which is present in mixing chamber 1 is moved in horizontal direction upon rotation of rotors 7, 8.

Rotors 7, 2, 8 are driven via a drive shaft 11 on the front side of mixing chamber 1. Drive shaft 11 is connected with the front end of rotor 7, whilst the other end of rotor 7 is connected with a gearbox 12. Rotors 2 and 8 are driven by rotor 7 via gearbox 12.

The direction of rotation of rotors 2, 7, 8 is such that the two horizontal rotors 7, 8 move the material to be mixed towards rotor 2, whilst rotor 2 moves said material in upward direction. A circulating flow of material is thereby present in the two mixing chamber portions 4, 5, as a result of which a good mixing effect is obtained, whilst an exchange of the material between the two mixing chamber portions 4, 5 is effected at the location of vertical rotor 2.

The bottom 6 of mixing chamber 1 includes an upwardly sloping part 38 near vertical rotor 2. The diameter of blades 9, 10 of horizontal rotors 7, 8 thereby decreases in the direction of vertical rotor, such that it joins bottom 6 at all times, also in part 38 of bottom 6.

A closable outlet 51 is present in the side wall of mixing chamber 1, near vertical rotor 2, which outlet functions to enable delivery of the mixed fodder at the location where it is to be consumed by the cattle.

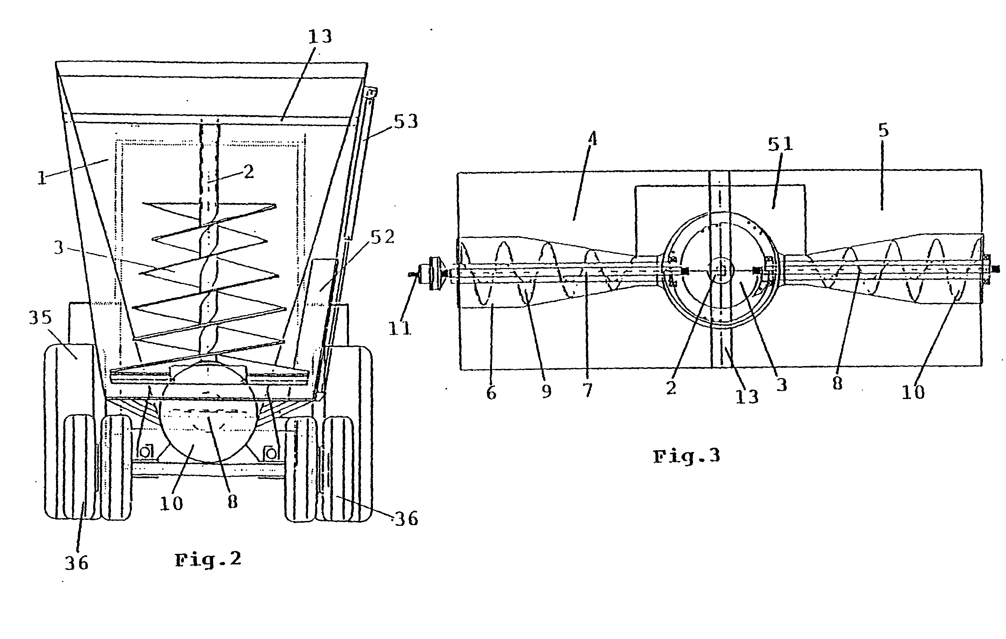

Figure 2 is a cross-sectional view of mixing chamber 1, which shows that the mixing chamber, and in particular the bottom part of mixing chamber 1, is wider near vertical rotor 2 than near rotors 7, 8. Present in the wider part is outlet 51 (Figure 1), which is closed by means of a slide 52, which can be moved upward by means of hydraulic cylinder 53 so as to release said outlet.

The upper side of rotor 2 is bearing-mounted in a cross beam 13, which extends in the transverse direction of mixing chamber 1 and which is mounted near the upper edge of the side wall of the mixing chamber.

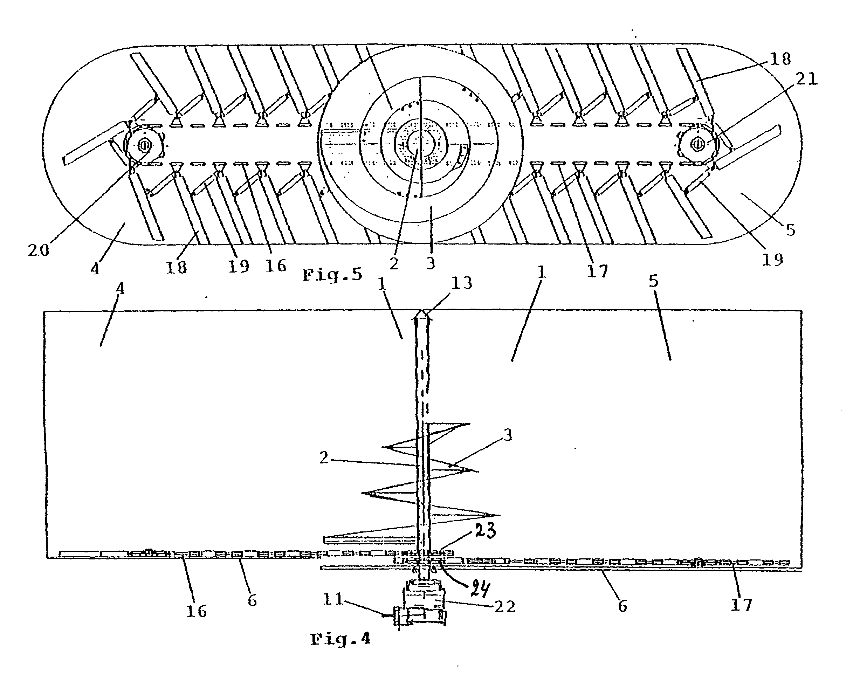

Figure 3 is a smaller-scale, schematic plan view of the mixing chamber according to Figures 1 and 2.

The vertical rotor 2, which is shown in Figures 1, 2 and 3, includes a double blade 14 consisting of twin helical blades extending within one another. The conveying capacity of such a rotor is larger at a particular rotational speed, twice as large in principle, as a result of which a mixture can be generated more quickly.

Figures 4 and 5 show an embodiment of a mixing chamber 1 wherein the horizontal mixing elements consist of two bottom chains 16, 17, which move substantially in a horizontal plane near the bottom of mixing chamber 1. Bottom chains 16, 17 move in a clockwise direction, seen in Figure 6. They are fitted with carriers 18, which are pivotally connected with the bottom chain. Carriers 18 are furthermore connected with bottom chain 17, 18 by means of connecting bars 19, so that carriers 18 will slightly retract from the material to be mixed when bottom chain 17, 18 rounds terminal wheel 20, 21.

It will be apparent that in the embodiment of Figures 4 and 5 the material to be mixed is not only moved in the direction of vertical mixing element 2, but also, on the other side of the mixing chamber, in opposite direction. This is conducive towards a good exchange of the material to be mixed between the two mixing chamber portions 4, 5.

In the embodiment according to Figures 4 and 5, driving takes place via gearbox 22, which is driven by means of drive shaft 11 and which in turn drives vertical rotor 2. Bottom chains 16, 17 both have a terminal wheel 23, 24 which is mounted on the shaft of rotor 2 and which is thus driven via gearbox 22.

## Claims

1. A mobile device for mixing fodder, in particular cattle fodder, which device includes a mixing chamber (1) containing a vertical mixing element (2), which is capable of rotation about a substantially vertical axis and which is capable of moving the fodder in upward direction, and a horizontal mixing element (7,8), which is capable of moving the fodder substantially in horizontal direction, and which includes driving means (11) for driving said mixing elements (2,7,8), wherein the mixing chamber (1) comprises a mixing chamber portion (4) positioned before the vertical mixing element (2), seen in the direction of movement of the device, and a mixing chamber portion (5) positioned behind said vertical mixing element (2), wherein a horizontal mixing element (7,8) is present in both mixing chamber portions (4,5), which element (7,8) is capable of moving the fodder towards the vertical mixing element (2), **characterized in that** the axis of rotation of the vertical mixing element (2) and the axes of rotation of the two horizontal mixing elements (7,8,16,18) extend substantially in the same vertical plane.

2. A device according to claim 1, **characterized in that** the dimension of the mixing chamber (1) in the direction of movement is larger, preferably more than two and a half times larger, more preferably more than three times larger, than the dimension of the mixing chamber (1) transversely to the direction of movement.

3. A device according to any one of the preceding claims, **characterized in that** the vertical mixing element (2) includes a helical blade, preferably twin helical blades extending within one another.

4. A device according to any one of the preceding claims, **characterized in that** part of the bottom (6) of the mixing chamber (1) slopes upwards in the direction of the vertical mixing element (2).

5. A device according to any one of the preceding claims, **characterized in that** a separate helical, horizontal mixing element (7,8) which is rotatable about a substantially horizontal axis is present in each mixing chamber portion (4,5).

6. A device according to claim 5, **characterized in that** the two horizontal mixing elements (7,8) are positioned substantially in line and **in that** they preferably have opposite pitch.

7. A device according to claim 5 or 6, **characterized in that** the driving means (11) drive one end of a horizontal mixing element (7), which mixing element (7) is drivably connected at the other end with said vertical mixing element (2) and/or with the other horizontal mixing element (8).

8. A device according to any one of the claims 5 - 7, **characterized in that** a horizontal mixing element (7,8) has, at least partially, a decreasing outside diameter, seen in the direction of the vertical mixing element (2).

9. A device according to any one of the claims 1 - 4, **characterized in that** the horizontal mixing element (7,8) comprises a bottom chain (16,17) fitted with carriers (18) which are moved along the bottom (6) of the mixing chamber (1).

10. A device according to claim 9, **characterized in that** said bottom chain (16,17) is an endless element which is movable essentially in a horizontal plane, to which carriers (18) extending essentially in a horizontal plane are attached, which carriers (18) pivot backwards when said element makes a turn.

11. A device according to claim 9 or 10, **characterized in that** a bottom chain (16,17) is present in each mixing chamber portion (4,5).

12. A device according to any one of the claims 9 - 11, **characterized in that** the driving means (11) drive the vertical mixing element (2) and the horizontal mixing element (7,8) is drivably connected to the vertical mixing element (2).

13. A device according to any one of the preceding claims, **characterized by** a closable outlet (51) for discharging the fodder from the mixing chamber (1), wherein the horizontal mixing element (7,8) extends higher than the lowest point of the outlet (51).

14. A method for mixing fodder in a mobile device, wherein fodder is mixed in a mixing chamber (1) containing a vertical mixing element (2), which rotates about a substantially vertical axis and moves the fodder in upward direction, and horizontal mixing element (7,8), which moves the fodder in substantially horizontal direction, wherein driving means (11) drive said mixing elements (2,7,8), wherein the mixing chamber (1) comprises a mixing chamber portion (4) positioned before the vertical mixing element (20, seen in the direction of movement of the device, and a mixing chamber portion (5) positioned behind said vertical mixing element (2), wherein a horizontal mixing element (7,8) is present in both mixing chamber portions (4,5), which element moves the fodder in the direction of said vertical mixing element(2), **characterized in that** the axis of rotation of the vertical mixing element (2) and the axes of rotation of the two horizontal mixing elements (7,8,16,17) extend substantially in the same vertical plane.

## Patentansprüche

1. Fahrbare Vorrichtung zum Mischen von Futter, insbesondere Viehfutter, welche Vorrichtung eine Mischkammer (1) aufweist, die ein Vertikal-Mischelement (2), welches zur Drehung um eine im Wesentlichen vertikale Achse in der Lage ist und welches zur Bewegung des Futters in Aufwärtsrichtung in der Lage ist, und ein Horizontal-Mischelement (7,8) aufweist, welches zur Bewegung des Futters in einer im Wesentlichen horizontalen Richtung in der Lage ist, und welche Antriebsmittel (11) zum Antreiben der Mischelemente (2,7,8) aufweist, wobei die Mischkammer (1) einen Mischkammerabschnitt (4), der in Bewegungsrichtung der Vorrichtung gesehen vor dem Vertikal-Mischelement (2) angeordnet ist, und einen Mischkammerabschnitt (5) aufweist, der hinter dem Vertikal-Mischelement (2) angeordnet ist, wobei ein Horizontal-Mischelement (7,8) in beiden Mischkammerabschnitten (4,5) präsent ist, welches Element (7,8) zur Bewegung des Futters in Richtung hin zum Vertikal-Mischelement (2) in der Lage ist, **dadurch gekennzeichnet, dass** die Drehachse des Vertikal-Mischelements (2) und die Drehachsen der beiden Horizontal-Mischelemente (7,8,16,18) sich im Wesentlichen in derselben Vertikalebene erstrecken.

2. Vorrichtung gemäß Anspruch 1, **dadurch gekennzeichnet, dass** die Abmessung der Mischkammer (1) in der Bewegungsrichtung größer ist, vorzugsweise mehr als zweieinhalbmal größer, besonders bevorzugt mehr als dreimal größer, als die Abmessung der Mischkammer (1) quer zur Bewegungsrichtung.

3. Vorrichtung gemäß einem der vorhergehenden Ansprüche, **dadurch gekennzeichnet, dass** das Vertikal-Mischelement (2) eine Schneckenschaufel aufweist, vorzugsweise doppelgängige Schneckenschaufeln, die sich ineinander erstrecken.

4. Vorrichtung gemäß einem der vorhergehenden Ansprüche, **dadurch gekennzeichnet, dass** sich ein Teil des Bodens (6) der Mischkammer (1) in Richtung hin zum Vertikal-Mischelement (2) aufwärts neigt.

5. Vorrichtung gemäß einem der vorhergehenden Ansprüche, **dadurch gekennzeichnet, dass** ein separates, schneckenförmiges Horizontal-Mischelement (7,8), welches um eine im Wesentlichen horizontale Achse drehbar ist, in jedem Mischkammerabschnitt (4,5) präsent ist.

6. Vorrichtung gemäß Anspruch 5, **dadurch gekennzeichnet, dass** die beiden Horizontal-Mischelemente (7,8) im Wesentlichen auf gleicher Linie liegend angeordnet sind, und dass sie vorzugsweise entgegengesetzte Steigung haben.

7. Vorrichtung gemäß einem der Ansprüche 5 oder 6, **dadurch gekennzeichnet, dass** die Antriebsmittel (11) das eine Ende eines Horizontal-Mischelements (7) antreiben, welches Mischelement (7) an dem anderen Ende mit dem Vertikal-Mischelement (2) und/oder mit dem anderen Horizontal-Mischelement (8) antreibbar verbunden ist.

8. Vorrichtung gemäß einem der Ansprüche 5 - 7, **dadurch gekennzeichnet, dass** ein Horizontal-Mischelement (7,8) einen mindestens teilweise in Richtung hin zum Vertikal-Mischelement (2) gesehen abnehmenden Außendurchmesser hat.

9. Vorrichtung gemäß einem der Ansprüche 1 - 4, **dadurch gekennzeichnet, dass** das Horizontal- Mischelement (7,8) eine Bodenkette (16,17) aufweist, an die Mitnehmer (18) befestigt sind, welche entlang dem Boden (6) der Mischkammer (1) bewegt werden.

10. Vorrichtung gemäß Anspruch 9, **dadurch gekennzeichnet, dass** die Bodenkette (16,17) ein Endlos-Element ist, welches im Wesentlichen in einer Horizontalebene bewegbar ist, an welches Mitnehmer (18) angebracht sind, die sich im Wesentlichen in einer Horizontalebene erstrecken, welche Mitnehmer (18) rückwärts schwenken, wenn das Element eine Wendung macht.

11. Vorrichtung gemäß einem der Ansprüche 9 oder 10, **dadurch gekennzeichnet, dass** eine Bodenkette (16,17) in jedem Mischkammerabschnitt (4,5) präsent ist.

12. Vorrichtung gemäß einem der Ansprüche 9 - 11, **dadurch gekennzeichnet, dass** die Antriebsmittel (11) das Vertikal-Mischelement (2) antreiben, und das Horizontal-Mischelement (7,8) an das Vertikal-Mischelement (2) antreibbar angeschlossen ist.

13. Vorrichtung gemäß einem der vorhergehenden Ansprüche, **gekennzeichnet durch** einen zum Entladen des Futters aus der Mischkammer (1) schließbaren Auslass (51), wobei das Horizontal-Mischelement (7,8) sich höher als die niedrigste Stelle des Auslasses (51) erstreckt.

14. Verfahren zum Mischen von Futter in einer fahrbaren Vorrichtung, wobei Futter in einer Mischkammer (1) gemischt wird, die ein Vertikal-Mischelement (2), welches sich um eine im Wesentlichen vertikale Achse dreht und das Futter in Aufwärtsrichtung bewegt, und ein Horizontal-Mischelement (7,8) aufweist, welches das Futter in im Wesentlich horizontaler Richtung bewegt, wobei Antriebsmittel (11) die Mischelemente (2,7,8) antreiben, wobei die Mischkammer (1) einen Mischkammerabschnitt (4), der in Bewegungsrichtung der Vorrichtung gesehen vor dem Vertikal-Mischelement (2) angeordnet ist, und einen Mischkammerabschnitt (5) aufweist, der hinter dem Vertikal-Mischelement (2) angeordnet ist, wobei ein Horizontal-Mischelement (7,8) in beiden Mischkammerabschnitten (4,5) präsent ist, welches Element das Futter in Richtung hin zum Vertikal-Mischelement (2) bewegt, **dadurch gekennzeichnet, dass** die Drehachse des Vertikal-Mischelements (2) und die Drehachsen der beiden Horizontal-Mischelemente (7,8,16,17) sich im Wesentlichen in der selben Vertikalebene erstrecken.

## Revendications

1. Dispositif mobile pour mélanger le fourrage, en particulier le fourrage destiné au bétail, lequel dispositif comprend une chambre de mélange (1) contenant un élément mélangeur vertical (2), qui est capable d'effectuer une rotation autour d'un axe sensiblement vertical et qui est capable de déplacer le fourrage en direction vers le haut, et un élément mélangeur horizontal (7,8), qui est capable de déplacer le fourrage sensiblement en direction horizontale, et qui comprend des moyens d'entraînement (11) pour entraîner lesdits éléments mélangeurs (2,7,8), dans lequel la chambre de mélange (1) comprend une portion de chambre de mélange (4) positionnée avant l'élément mélangeur vertical (2), vu dans la direction de mouvement du dispositif, et une portion de chambre de mélange (5) positionnée derrière ledit élément mélangeur vertical (2), dans lequel un élément mélangeur horizontal (7,8) est présent dans les deux portions de chambre de mélange (4,5), lequel élément (7,8) est capable de déplacer le fourrage vers l'élément mélangeur vertical (2), **caractérisé en ce que** l'axe de rotation de l'élément mélangeur vertical (2) et les axes de rotation des deux éléments mélangeurs horizontaux (7,8,16,18) s'étendent sensiblement dans le même plan vertical.

2. Dispositif selon la revendication 1, **caractérisé en ce que** la dimension de la chambre de mélange (1) dans la direction de mouvement est plus grande, de préférence plus de deux fois et demie plus grande, de façon plus préférée plus de trois fois plus grande que les dimensions de la chambre de mélange (1) transversalement à la direction de mouvement.

3. Dispositif selon l'une quelconque des revendications précédentes, **caractérisé en ce que** l'élément mélangeur vertical (2) comprend une lame hélicoïdale, de préférence des lames hélicoïdales jumelles, s'étendant l'une dans l'autre.

4. Dispositif selon l'une quelconque des revendications précédentes, **caractérisé en ce qu'**une partie du fond (6) de la chambre de mélange (1) est inclinée vers le haut dans la direction de l'élément mélangeur vertical (2).

5. Dispositif selon l'une quelconque des revendications précédentes, **caractérisé en ce qu'**un élément mélangeur horizontal, hélicoïdal séparé (7,8) qui peut tourner autour d'un axe sensiblement horizontal est présent dans chaque portion de chambre de mélange (4,5).

6. Dispositif selon la revendication 5, **caractérisé en ce que** les deux élément mélangeurs horizontaux (7,8) sont positionnés sensiblement en ligne et **en ce qu'**ils ont de préférence un pas opposé.

7. Dispositif selon la revendication 5 ou 6, **caractérisé en ce que** les moyens d'entraînement (11) entraînent une extrémité d'un élément mélangeur horizontal (7), lequel élément mélangeur (7) est raccordé, de façon à pouvoir être entraîné, à l'autre extrémité audit élément mélangeur vertical (2) et/ou à l'autre élément mélangeur horizontal (8).

8. Dispositif selon l'une quelconque des revendications 5-7, caractérisé en qu'un élément mélangeur horizontal (7,8) présente, au moins partiellement, un diamètre extérieur décroissant, vu dans la direction de l'élément mélangeur vertical (2).

9. Dispositif selon l'une quelconque des revendications 1-4, **caractérisé en ce que** l'élément mélangeur horizontal (7,8) comprend une chaîne de fond (16,17) munie d'entraîneurs (18) qui sont déplacés le long du fond (6) de la chambre de mélange (1).

10. Dispositif selon la revendication 9, **caractérisé en ce que** ladite chaîne de fond (16,17) est un élément sans fin qui est déplaçable sensiblement dans un plan horizontal, sur lequel sont fixés des entraîneurs (18) s'étendant sensiblement dans un plan horizontal, lesquels entraîneurs (18) pivotent vers l'arrière lorsque ledit élément effectue un tour.

11. Dispositif selon la revendication 9 ou 10 **caractérisé en ce qu'**une chaîne de fond (16,17) est présente dans chaque portion de chambre de mélange (4,5).

12. Dispositif selon l'une quelconque des revendications 9-11, **caractérisé en ce que** les moyens d'entraînement (11) entraînent l'élément mélangeur vertical (2) et l'élément mélangeur horizontal (7,8) est raccordé, de façon à pouvoir être entraîné, à l'élément mélangeur vertical (2).

13. Dispositif selon l'une quelconque des revendications précédentes, **caractérisé par** une sortie apte à la fermeture (51) pour décharger le fourrage de la chambre de mélange (1), dans lequel l'élément mélangeur horizontal (7,8) s'étend plus haut que le point le plus bas de la sortie (51).

14. Procédé pour mélanger le fourrage dans un dispositif mobile, dans lequel le fourrage est mélangé dans une chambre de mélange (1) contenant un élément mélangeur vertical (2), qui tourne autour d'un axe sensiblement vertical et déplace le fourrage en direction vers le haut, et un élément mélangeur horizontal (7,8), qui déplace le fourrage en direction sensiblement horizontale, dans lequel des moyens d'entraînement (11) entraînent lesdits éléments mélangeurs (2,7,8), dans lequel la chambre de mélange (1) comprend une portion de chambre de mélange (4) positionnée avant l'élément mélangeur vertical (20), vu dans la direction de mouvement du dispositif, et une portion de chambre de mélange (5) positionnée derrière ledit élément mélangeur vertical (2), dans lequel un élément mélangeur horizontal (7,8) est présent dans les deux portions de la chambre de mélange (4,5), lequel élément déplace le fourrage en direction dudit élément mélangeur vertical (2), **caractérisé en ce que** l'axe de rotation de l'élément mélangeur (2) vertical et les axes de rotation des deux éléments mélangeurs horizontaux (7,8,16,17) s'étendent sensiblement dans le même plan vertical.
